Europäisches Patentamt

European Patent Office

Office européen des brevets

(19)

(11) Numéro de publication: **0 205 372**
**B1**

(12) **FASCICULE DE BREVET EUROPEEN**

(45) Date de publication du fascicule du brevet:
**15.11.89**

(51) Int. Cl.⁴: **H02G 11/00, H01R 35/02**

(21) Numéro de dépôt: **86401083.0**

(22) Date de dépôt: **22.05.86**

(54) **Dispositif de guidage pour une portion de câble ou de faisceau de câbles de raccordement entre un boîtier fixe et une partie mobile articulée.**

(30) Priorité: **24.05.85 FR 8507878**

(43) Date de publication de la demande:
**17.12.86 Bulletin 86/51**

(45) Mention de la délivrance du brevet:
**15.11.89 Bulletin 89/46**

(84) Etats contractants désignés:
**DE FR GB IT**

(56) Documents cités:
**EP-A- 0 012 223**
**FR-A- 861 229**
**GB-A- 2 069 445**

(73) Titulaire: **JAEGER, 2, rue Baudin,**
**F-92303 Levallois-Perret(FR)**

(72) Inventeur: **Boucher, Alain, 182, rue de Charenton,**
**F-75012 Paris(FR)**
Inventeur: **Boisseau, Marc, 6-8, rue du Chemin-Vert,**
**F-92110 Clichy(FR)**

(74) Mandataire: **Martin, Jean-Jacques et al, Cabinet**
**REGIMBEAU 26, Avenue Kléber, F-75116 Paris(FR)**

ACTORUM AG

**Description**

L'invention concerne le guidage d'une portion de câble ou de faisceau de câbles de raccordement entre un boîtier fixe et une partie mobile portant des appareillages, cette partie mobile étant articulée sur le boîtier dont la profondeur permet de loger lesdits appareillages en position fermée.

Dans certaines applications, les boîtiers doivent être relativement compacts tout en recevant de nombreux appareillages, de sorte que les espaces libres peuvent être très réduits, ce qui pose de nombreux problèmes lorsqu'il s'agit de prévoir le raccordement entre le boîtier fixe et une partie mobile articulée, par exemple un capot porteur d'appareillages formant face avant pour le boîtier en position fermée. On peut se trouver en effet dans l'impossibilité de laisser le mou nécessaire pour la portion de câble ou de faisceau de câbles, soit parce que l'espace disponible ne le permet pas, soit encore parce que la constitution du câble ou du faisceau de câble est incompatible avec des rayons de courbure très faibles, comme c'est le cas pour les fibres optiques par exemple. De plus, la présence d'un mou important, indispensable pour un grand débattement angulaire de l'organe mobile, introduit à chaque opération une fatigue qui peut amener à une rupture d'un ou plusieurs câbles; si l'encombrement est réduit, on multiplie en plus les risques de coincement ou d'écrasement du câble ou du faisceau de câbles, car le cheminement ne peut pas être contrôlé.

Il a été proposé de guider un point particulier d'un faisceau de câbles avec un ressort de traction rappelant ledit faisceau vers l'intérieur du boîtier. Ainsi, dans la demande de brevet européen N° 0 012 223, le raccordement entre un boîtier d'enregistreur de route et une assiette articulée supportant un disque porte-diagramme est muni d'un ressort de traction. Cependant, la disposition décrite ne supprime pas les coudes dangereux (rupture par fatigue), et reste limitée à une plage angulaire moyenne pour le débattement de la partie mobile (il suffit en effet de pivoter l'assiette d'environ 45°, afin de pouvoir retourner le disque port-diagramme). Il est aisé de constater que le cheminement du faisceau de câble n'est pas contrôlé avec précision dans toutes les positions de la partie mobile, le faisceau pouvant se plier dans des directionstrès variables.

Dans un contexte plus général, il existe de nombreux dispositifs de liaison déformable pour connexions électriques; on peut citer à ce titre le brevet français N° 861 229 et la demande de brevet anglais N° 2 069 445.

L'objet principal de l'invention est de proposer un dispositif de guidage plus fiable, permettant de contrôler le cheminement du câble ou du faisceau de câbles dans toutes les positions prévues pour la partie mobile articulée sur le boîtier.

Un autre but de l'invention est d'avoir un guidage s'accomodant d'espaces libres très réduits, comme c'est le cas par exemple pour les enregistreurs de route dans le boîtier desquels sont logés de nombreux appareillages.

Un autre but de l'invention est d'éviter la formation de coudes dangereux pouvant générer une rupture par fatigue, grâce à un contrôle rigoureux du cheminement.

Il s'agit plus particulièrement d'un dispositif de guidage pour une portion de câble ou de faisceau de câbles de raccordement entre un boîtier fixe et une partie mobile portant des appareillages, ladite partie mobile étant articulée sur ledit boîtier dont la profondeur permet de loger lesdits appareillages en position fermée, ladite portion de câble reliant un point d'accrochage latéral du boîtier fixe à un point d'accrochage de la partie mobile, caractérisé par le fait qu'il comporte un organe de guidage porté par le boîtier fixe au voisinage du point d'accrochage associé, ledit organe étant articulé selon un axe essentiellement perpendiculaire à l'axe d'articulation de la partie mobile, et des moyens tendant à rappeler constamment ledit organe de guidage en direction de la surface intérieure du boîtier fixe, la longueur de la portion de câble s'étendant au-delà dudit organe de guidage jusqu'au point d'accrochage de la partie mobile restant essentiellement constante sur toute la plage angulaire de ladite partie mobile, de sorte que le cheminement de la portion de câble d'un point d'accrochage à l'autre est parfaitement contrôlé.

En particulier, entre l'organe de guidage articulé et le point d'accrochage de la partie mobile, la portion de câble suit un cheminement sensiblement parallèle à l'axe d'articulation de ladite partie mobile lorsque celle-ci est en position fermée; plus généralement, il est avantageux qu'entre le point d'accrochage latéral du boîtier et le point d'accrochage de la partie mobile, la portion de câble suive un cheminement contenu dans un plan sensiblement parallèle à l'axe d'articulation de ladite partie mobile lorsque celle-ci est en position fermée.

Selon une disposition avantageuse, la partie mobile présente, parallèlement à son axe d'articulation et au voisinage de celui-ci, un berceau d'appui à une extrémité duquel est prévu un coude de passage constituant le point d'accrochage de ladite partie mobile, de préférence réalisé en une pièce rapportée, maintenue en place par un embout formant le coude de passage.

Avantageusement, entre l'organe de guidage articulé et le point d'accrochage de la partie mobile, la portion de câble est protégée contre un écrasement lors de la fermeture par un manchon tubulaire; en particulier, il est intéressant de réaliser ce manchon tubulaire de protection sous forme d'un ressort à spires jointives, fixé d'une part sur la partie mobile au voisinage du point d'accrochage associé, et d'autre part su l'organe de guidage articulé. La longueur étant en fait essentiellement constante, c'est plutôt la souplesse et la résistance à l'écrasement qui son intéressantes avec un tel ressort, sans parler de la facilité du montage.

Lorsque l'on est en présence d'un boîtier arrondi, par exemple cylindrique, il est intéressant de réaliser l'organe de guidage articulé selon un volet incurvé, rappelé vers la surface intérieure du boîtier par un ressort de torsion, et présentant un évidement pour le passage de la portion de câble. Un tel volet permet d'obtenir, en position fermée, un cheminement avantageux, le câble ou faisceau de câbles commençant par épouser le contour intérieur du boîtier.

Pour une réalisation très compacte, le volet incurvé est de préférence articulé sur une pièce passe-fil fixée à l'extérieur du boîtier, au voisinage d'une fenêtre ménagée dans le boîtier en regard dudit volet incurvé, ladite pièce passe-fil constituant le point d'accrochage latéral.

D'une façon générale, la longueur utile de guidage du volet incurvé est choisie en fonction de la plage angulaire requise pour la partie mobile, de façon que la portion de câble ne subisse aucune tension dangereuse pour toute position de ladite partie mobile correspondant à ladite plage angulaire.

D'autres avantages de l'invention apparaîtront plus clairement à la lumière de la description qui va suivre et du dessin annexé, concernant un mode de réalisation préférentiel de l'invention, en référence aux figures où:

- la figure 1 illustre schématiquement un enregistreur de route destiné à être équipé d'un dispositif de guidage conforme à l'invention,
- la figure 2 est une vue partielle en perspective montrant un dispositif de guidage de faisceau de câbles conforme à l'invention dans les deux positions extrêmes de la partie mobile,
- la figure 3 est une vue éclatée illustrant le montage du dispositif de guidage de la figure 2 monté sur le boîtier et le capot porteur d'appareillages d'un enregistreur de route, ledit capot articulé étant représenté séparé du boîtier pour plus de clarté.

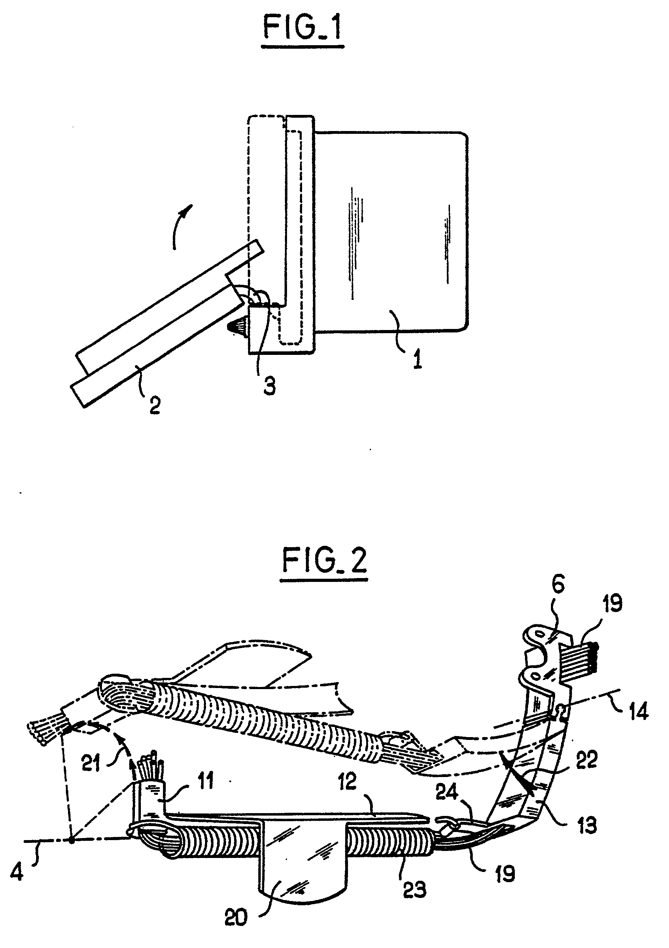

L'enregistreur illustré à la figure 1 est un enregistreur de route comportant un boîtier 1, et un capot 2 porteur d'appareillages (non représentés) et articulé au moyen d'un charnière 3 sur ledit boîtier. Cet enregistreur de route est destiné à recevoir un dispositif de guidage conforme à l'invention, pour une portion de câble ou de faisceau de câbles de raccordement entre le boîtier 1 et la partie mobile 2. Il va de soi que le dispositif de guidage de l'invention peut équiper d'autres appareils, et que la partie mobile portant des appareillages pourrait aussi être une assiette articulée sur un boîtier fixe.

Dans ce type d'application, l'espace libre pour loger une portion de câble ou de faisceau de câbles de raccordement est extrêmement réduit, de sorte qu'il est important de pouvoir contrôler le cheminement du câble ou du faisceau de câbles dans toutes les positions que peut prendre la partie mobile articulée sur le boîtier. En effet, la face du capot tournée vers l'intérieur sert, directement ou indirectement, de surface d'appui pour un ou plusieurs disques porte-diagramme contre lesquels oscillent des organes scripteurs: l'espace libre pour une portion de câble ou de faisceau de câbles est de ce fait réduit à un passage transversal, cheminant selon une direction générale essentiellement parallèle à l'axe d'articulation du capot.

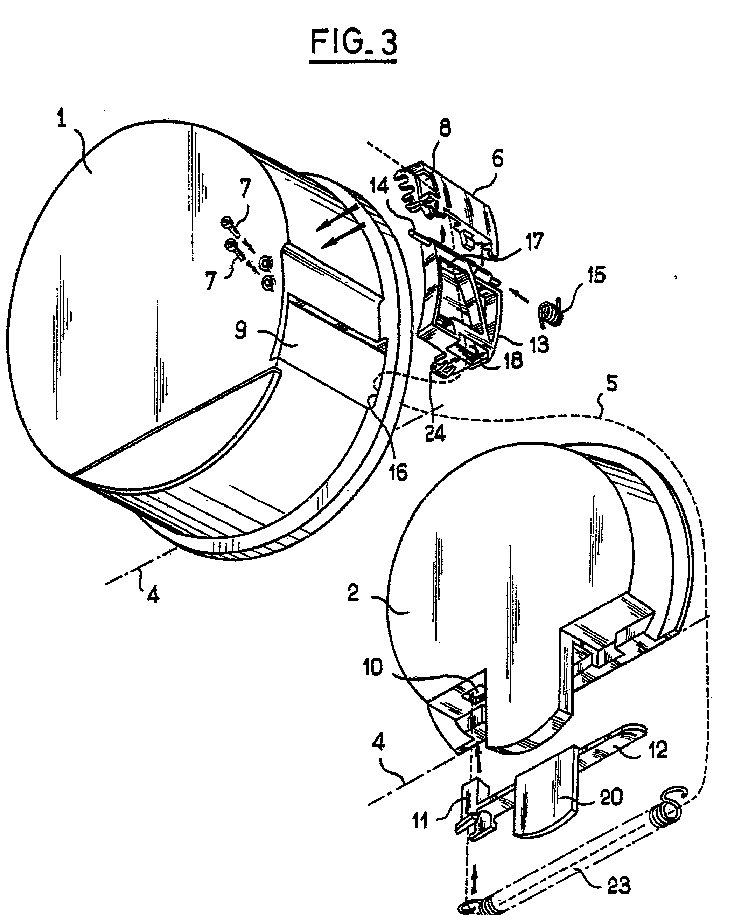

Dans la description qui va suivre, on se référera à une portion de câble, étant entendu qu'il peut s'agir d'un câble unique ou d'un faisceau de câbles (enrobés ou non dans une gaine), ce ou ces câbles pouvant être électriques, pneumatiques ou à fibres optiques. Pour bien comprendre la cinématique du dispositif de guidage de l'invention, telle qu'elle est illustrée schématiquement en figure 2, il est nécessaire de décrire d'abord les organes de structure représentés à la figure 3.

L'enregistreur de route comporte un boîtier profond 1 et une porte mobile 2 articulée selon un axe 4, ledit axe étant ici dédoublé par mesure de clarté. Une portion de câble prévue pour le raccordement entre le boîtier fixe et la porte mobile, relie un point d'accrochage latéral dudit boîtier à un point d'accrochage de ladite porte mobile ; la figure 3 en traits interrompus schématise ici le passage de la portion de câble d'un point d'accrochage à l'autre. L'expression "point d'accrochage" doit être comprise dans un sens large, comme désignant un point de liaison essentiellement fixe avec ou sans moyen de fixation particulier : dans le cas présent, les points d'accrochage sont réalisés par des pièces imprimant un coude à la portion de câble.

Côté boîtier, on trouve une pièce passe-fil 6 fixée au moyen de vis 7 contre la périphérie extérieure dudit boîtier. La portion de câble passe par une ouverture 8 de la pièce passe-fil 6, selon une direction sensiblement parallèle à l'axe du boîtier 1, puis en sort après un coude pour pénétrer dans une fenêtre 9 ménagée dans le boîtier; la référence 6 désignera ainsi dans la suite de la description le point d'accrochage latéral du boîtier fixe. Côté porte mobile, la portion de câble sort par une ouverture 10, puis passe sous le bord de ladite porte dans une direction sensiblement parallèle à l'axe d'articulation. Pour éviter d'endommager la portion de câble au franchissement de l'ouverture 10, il est prévu un embout de passage 11 constituant l'extrémité d'une pièce rapportée formant berceau d'appui 12 ; la référence 11 désignera ainsi, de la même façon, le point d'accrochage de la partie mobile articulée.

Conformément à un aspect essentiel de l'invention, le dispositif de guidage de la portion de câble comporte un organe de guidage 13, porté par le boîtier 1 au voisinage du point d'accrochage associé 6, ledit organe 13 étant articulé selon un axe 14 essentiellement perpendiculaire à l'axe d'articulation 4 de la partie mobile, et des moyens tendant à rappeler constamment cet organe de guidage en direction de la surface intérieure du boîtier fixe. Ici, l'organe de guidage articulé 13 est réalisé sous forme d'un volet incurvé, portant un axe d'articulation 14 monté par clipsage dans des ergots correspondants de la pièce passe-fil 6 ; ce volet incurvé peut ainsi pivoter au niveau de la fenêtre 9, et est constamment rappelé par un ressort de torsion 15 en direction de la surface intérieure du boîtier fixe, c'est-à-dire vers une position de repos dans laquelle ledit volet incurvé est en butée contre le bord 16 de la collerette du boîtier 1. De préférence, pour un bon guidage de la portion de câble, le volet présente un évidement pour le passage de ladite portion de câble entre l'ouverture d'entrée 17 et l'ouverture de sortie 18.

Ainsi, selon un principe fondamental de l'invention, la longueur de la portion de câble s'étendant au-delà du volet incurvé 13 jusqu'au point d'accrochage 11 de la partie mobile reste essentiellement constante su toute la plage angulaire de ladite partie mobile lors de la manipulation de celle-ci, de sorte que le cheminement de la portion de câble d'un point d'accrochage à l'autre est parfaitement contrôlé. En effet, à partir du point d'accrochage latéral 6, la portion de câble suit d'abord la courbure du volet 13, puis, au-delà dudit volet, suit un cheminement essentiellement rectiligne jusqu'au point d'accrochage 11 lorsque la porte mobile est en position fermée. La portion de câble suit ainsi un cheminement d'abord incurvé épousant la surface intérieure du boîtier, puis, au-delà du volet 13, un cheminement sensiblement parallèle à l'axe d'articulation 4 de la partie mobile, ce qui permet un logement particulièrement compact de la portion de câble. A l'ouverture de la porte mobile 2, une légère traction est exercée sur la portion de câble au niveau du point d'accrochage 11, produisant un basculement progressif du volet mobile 13.

Le mouvement dans l'espace de la portion de câble considérée sera encore mieux compris en se reportant à la figure 2, sur laquelle est illustrée la cinématique du dispositif de l'invention, entre la position fermée et la position ouverte de la porte mobile.

En bas de la figure 2, la portion de câble 19 suit un cheminement correspondant à la position fermée de la partie mobile : le volet incurvé 13 est en butée contre la surface intérieure du boîtier, et la portion de câble passe, au-delà dudit volet, le long du berceau d'appui 12 jusqu'à l'embout d'extrémité 11. A l'ouverture de la porte mobile, le point d'accrochage 11 décrit un arc de cercle autour de l'axe d'articulation 4 (flèches 21), tandis que le volet incurvé 13 est simultanément soumis à un mouvement de rotation autour se son axe 14 (flèche 22). La position haute de la figure 2 illustre le cheminement de la portion de câble correspondant à une position d'ouverture maximale pour la porte mobile.

La portion de câble s'étendant au-delà du volet 13 jusqu'au point d'accrochage 11 de la partie mobile conserve alors une longueur essentiellement constante sur toute la plage angulaire de ladite partie mobile, évitant ainsi à tout moment une tension défavorable pour la portion de câble. La longueur utile de guidage du volet incurvé sera naturellement choisie en fonction de la plage angulaire requise pour le passage des appareillages à l'ouverture de la partie mobile, de façon à être certain que la portion de câble ne subisse aucune tension. On observera que tous les cheminements intermédiaires de la portion de câble, entre les positions extrêmes illustrées en figure 2, sont à tout moment parfaitement contrôlés, ce qui est un avantage important que ne procurent pas les dispositifs de guidage connus.

L'axe d'articulation 14 du volet mobile est ici sensiblement parallèle à l'axe du boîtier, c'est-à-dire perpendiculaire à l'axe 4 de la charnière, de sorte que la portion de câble suit un cheminement contenu dans un plan sensiblement parallèle à cet axe d'articulation 4, lorsque la porte mobile est en position fermée. Outre un logement dans un espace très compact, ceci permet d'éviter toute fatigue dangereuse et toute formation indésirable de coude pour la portion de câble. Il serait cependant possible de prévoir un axe 14 légèrement oblique, mais cela introduirait une dissymétrie moins avantageuse et une usure plus rapide dans le temps.

Il convient de noter qu'à la fermeture de la porte mobile, le ressort 15 rappelle le volet incurvé 13 vers la surface intérieure de boîtier ce qui, en plus du contrôle déjà mentionné du cheminement de la portion de câble, permet un effacement dudit volet pour le passage de la porte mobile dont la face tournée vers l'intérieur du boîtier est nécessairement importante en raison de sa fonction d'appui pour l'enregistrement du ou des disques porte-diagramme.

Il est avantageux de prévoir une protection contre l'écrasement pour la portion de câble, au-delà du volet jusqu'au point d'accrochage de la partie mobile, et ceci peut être obtenu au moyen d'un manchon souple ou rigide. Selon une disposition particulièrement avantageuse de l'invention, cette protection contre l'écrasement est obtenue par un ressort 23 à spires jointives, dont on utilise au mieux la souplesse et la résistance à la compression radiale. On diminue encore les efforts exercés au point d'accrochage 11 et à l'extrémité du volet 13 en prévoyant une fixation du ressort 23, d'une part sur l'embout 11, et d'autre part sur une patte saillante 24 prévue à cet effet à l'extrémité du volet 13, ce qui permet en plus d'assurer une parfaite transmission du mouvement jusqu'audit volet sur toute la plage angulaire de la partie mobile.

Le dispositif de l'invention permet ainsi de contrôler, avec une grande fiabilité, le cheminement du câble ou du faisceau de câbles, dans toutes les positions prévues pour la partie mobile articulée sur le boîtier. Ce guidage s'accommode particulièrement bien d'espaces libres très réduits, comme c'est le cas pour les enregistreurs de route dans le boîtier desquels doivent être logés de nombreux appareillages. De plus, la tension et la fatigue, exercées sur la portion de câble lors du mouvement de la partie mobile, sont ainsi très réduites, ce qui est très avantageux pour la fiabilité du raccordement dans le temps.

Le dispositif de guidage de l'invention est naturellement adaptable sur des boîtiers très divers. De toute façon, selon l'encombrement et le degré d'ouverture désiré pour la partie mobile, il sera aisé de choisir un positionnement convenable de la portion de câble par rapport à l'axe d'articulation de cette partie mobile, ainsi que la longueur utile de l'organe de guidage articulé.

**Revendications**

1. Dispositif de guidage pour une portion de câble ou de faisceau de câbles de raccordement entre un boîtier fixe (1) et une partie mobile (2) portant des appareillages, ladite partie mobile (2) étant articulée sur ledit boîtier (1) dont la profondeur permet de loger lesdits appareillages en position fermée, ladite portion de câble reliant un point d'accrochage latéral (6) du boîtier fixe (1) à un point d'accrochage (11) de la partie mobile (2), caractérisé par le fait qu'il comporte un organe de guidage (13) porté par le boîtier fixe (1) au voisinage du point d'accrochage associé (6), ledit organe étant articulé selon un axe (14) essentiellement perpendiculaire à l'axe d'articulation (4) de la partie mobile (2), et des moyens (15) tendant à rappeler constamment ledit organe de guidage en direction de la surface intérieure du boîtier fixe, la longueur de la portion de câble s'étendant au-delà dudit organe de guidage jusqu'au point d'accrochage (11) de la partie mobile (2) restant essentiellement constante sur toute la plage angulaire de ladite partie mobile, de sorte que le cheminement de la portion de câble d'un point d'accrochage à l'autre est parfaitement contrôlé.

2. Dispositif de guidage selon la revendication 1, caractérisé par le fait qu'entre l'organe de guidage articulé (13) et le point d'accrochage (11) de la partie mobile, la portion de câble suit un cheminement sensiblement parallèle à l'axe d'articulation (4) de ladite partie mobile lorsque celle-ci est en position fermée.

3. Dispositif de guidage selon la revendication 2, caractérisé par le fait qu'entre le point d'accrochage latéral (6) du boîtier et le point d'accrochage (11) de la partie mobile, la portion de câble suit un cheminement contenu dans un plan sensiblement parallèle à l'axe d'articulation (4) de ladite partie mobile lorsque celle-ci est en position fermée.

4. Dispositif de guidage selon l'une des revendications 2 et 3, caractérisé par le fait que la partie mobile présente, parallèlement à son axe d'articulation et au voisinage de celui-ci, un berceau d'appui (12) à une extrémité duquel est prévu un coude de passage constituant le point d'accrochage (11) de ladite partie mobile.

5. Dispositif de guidage selon la revendication 4, caractérisé par le fait que le berceau (12) est une pièce rapportée, maintenue en place par un embout (11) formant le coude de passage.

6. Dispositif de guidage selon l'une des revendications 1 à 3, caractérisé par le fait qu'entre l'organe de guidage articulé (13) et le point d'accrochage (11) de la partie mobile, la portion de câble est protégée contre un écrasement lors de la fermeture par un manchon tubulaire.

7. Dispositif de guidage selon la revendication 6, caractérisé par le fait que le manchon tubulaire est un ressort (23) à spires jointives.

8. Dispositif de guidage selon la revendication 7, caractérisé par le fait que le ressort (23) est fixé d'une part sur la partie mobile au voisinage du point d'accrochage associé, et d'autre part sur l'organe de guidage articulé.

9. Dispositif de guidage selon l'une des revendications 1 à 8, caractérisé par le fait que l'organe de guidage articulé (13) est un volet incurvé.

10. Dispositif de guidage selon la revendication 9, caractérisé par le fait que le volet incurvé (13) présent un évidement pour le passage de la portion de câble.

11. Dispositif de guidage selon l'une des revendications 9 et 10, caractérisé par le fait que le volet est rappelé vers la surface intérieure du boîtier par un ressort de torsion (15).

12. Dispositif de guidage selon l'une des revendications 9 à 11, caractérisé par le fait que le volet incurvé (13) est articulé sur une pièce passe-fil (6) fixée à l'extérieur du boîtier, au voisinage d'une fenêtre (9) ménagée dans le boîtier en regard dudit volet incurvé, ladite pièce passe-fil constituant le point d'accrochage latéral.

13. Dispositif de guidage selon l'une des revendications 9 à 12, caractérisé par le fait que la longueur utile de guidage du volet incurvé (13) est choisie en fonction de la plage angulaire requise pour la partie mobile (2), de façon que la portion de câble ne subisse aucune tension dangereuse pour toute position de ladite partie mobile correspondant à ladite plage angulaire.

14. Dispositif de guidage selon l'une des revendications 1 à 13, caractérisé par le fait que la partie mobile (2) est un capot porteur d'appareillages, formant face avant pour le boîtier (1) en position fermée.

## Claims

1. A device for guiding a portion of cable or of a bundle of cables forming a connection between a fixed housing (1) and a movable part (2, carrying items of apparatus, the said movable part (2) being articulated to the said housing (1) of which the depth allows it to receive the said apparatus in the closed position, the said portion of cable connecting a lateral attachment point (6) on the fixed housing (1) to an attachment point (11) on the movable part (2), characterised by the fact that it comprises a guide member (13) carried by the fixed housing (1) in the neighbourhood of the associated attachment point (6), the said member being articulated on an axis (14) substantially perpendicular to the hinge axis (4) of the movable part (2), and means (15) tending to urge the said guide member constantly in a direction towards the inside surface of the fixed housing, the length of the portion of cable extending beyond the said guide member to the attachment point (11) on the movable part (2) remaining substantially constant throughout the range of angular movement of the said movable part, such that the path of the portion of cable from one attachment point to the other is under perfect control.

2. A guiding device according to claim 1, characterised by the fact that, between the articulated guide member (13) and the attachment point (11) on the movable part, the portion of cable follows a path substantially parallel to the axis of articulation (4) of the said movable part when it is in its closed position.

3. A guiding device according to claim 2 characterised by the fact that, between the lateral attachment point (6) on the housing and the attachment point (11) on the movable part, the portion of cable follows a path contained in a plane substantially parallel to the axis of articulation (4) of the said movable part when the latter is in its closed position.

4. A guiding device according to one of claims 2 and 3 characterised by the fact that the movable part has, parallel to its axis of articulation and in the neighbourhood of it, a supporting cradle (12) at one end of which is provided a guide bend constituting the attachment point (11) of the said movable part.

5. A guiding device according to claim 4 characterised by the fact that the cradle (12) is a separate member maintained in place by a nozzle (11) forming the guide bend.

6. A guiding arrangement according to one of claims 1 to 3 characterised by the fact that, between the articulated guide member (13) and the attachment point (11) on the movable part the portion of cable is protected against crushing during closing by a tubular sleeve.

7. A guiding device according to claim 6 characterised by the fact that the tubular sleeve is a close-coiled spring (23).

8. A guiding device according to claim 7 characterised by the fact that the spring (23) is secured on the one hand on the movable part in the neighbourhood of the associated attachment point and on the other hand on the articulated guide member.

9. A guiding device according to one of claims 1 to 8 characterised by the fact that the articulated guiding member (13) is a curved flap.

10. A guiding device according to claim 9 characterised by the fact that the curved flap (13) has a recess to receive the portion of cable.

11. A guiding device according to one of claims 9 and 10 characterised by the fact that the flap is urged towards the inside surface of the housing by a torsion spring (15).

12. A guiding device according to one of claims 9 to 11 characterised by the fact that the curved flap (13) is articulated to a grommet member (6) secured on the outside of the housing in the neighbourhood of a window (9) provided in the housing opposite the said curved flap, the said grommet member constituting the lateral attachment poin.

13. A guiding device according to one of claims 9 to 12 characterised by the fact that the effective guiding length of the curved flap (13) is chosen as a function of the angular range required of the movable part (2), such that the portion of the cable is not subjected to any dangerous tension in any position of the said movable part corresponding to the said range of angular movement.

14. A guiding device according to one of claims 1 to 13 characterised by the fact that the movable part (2) is a casing carrying items of apparatus and coming into face to face engagement with the housing (1) in the closed position.

**Patentansprüche**

1. Vorrichtung zum Führen eines Teils eines Kabels oder eines Kabelbündels zur Verbindung zwischen einem feststehenden Gehäuse (1) und einem beweglichen Bereich (2), der Einrichtungen trägt, wobei der bewegliche Bereich (2) an dem genannten Gehäuse angelenkt ist, dessen Tiefe erlaubt, die genannten Einrichtungen geschlossen aufzunehmen, wobei der Teil des Kabels einen seitlichen Aufhängepunkt (6) des feststehenden Gehäuses (1) mit einem Aufhängepunkt (11) des beweglichen Teils (2) verbindet, dadurch gekennzeichnet, daß sie ein Führungsorgan (13) aufweist, das von dem feststehenden Gehäuse (1) in der Nähe des zugehörigen Aufhängepunkts (6) getragen wird, wobei das genannte Organ gemäß einer Achse (14) angelenkt ist, die im wesentlichen senkrecht zur Gelenkachse (4) des beweglichen Bereichs (2) verläuft, und Einrichtungen (15) ständig das genannte Führungsorgan in Richtung der Innenfläche des feststehenden Gehäuses zurückzudrängen suchen, wobei die Länge des Kabelteils sich über das Führungsorgan hinauserstreckt, bis zu einem Aufhängepunkt (11) des beweglichen Bereichs (2) der im wesentlichen konstant auf dem gesamten Winkelbereich des beweglichen Teils verbleibt, derart, daß das Vorangehen des Kabelteils von einem Aufhängepunkt zum anderen perfekt gesteuert wird.

2. Führungsvorrichtung nach Anspruch 1, dadurch gekennzeichnet, daß zwischen dem angelenkten Führungsorgan (13) und dem Aufhängepunkt (11) des beweglichen Bereichs das Kabelteil einem im wesentlichen zur Gelenkachse (4) des genannten beweglichen Bereichs parallelen Weg folgt, wenn dieser in geschlossener Stellung ist.

3. Führungsvorrichtung nach Anspruch 2, dadurch gekennzeichnet, daß zwischen dem seitlichen Aufhängepunkt (6) des Gehäuses und dem Aufhängepunkt (11) des beweglichen Bereichs das Kabelteil einem Weg folgt, der in einer zur Gelenkachse (4) des beweglichen Bereichs im wesentlichen parallelen Ebene enthalten ist, wenn dieses Teil in Schließstellung ist.

4. Führungsvorrichtung nach einem der Ansprüche 2 oder 3, dadurch gekennzeichnet, daß der bewegliche Bereich parallel zu seiner Gelenkachse und in der Nähe von dieser eine Kippwiege (12) aufweist, an deren einem Ende ein Durchtrittsknick vorgesehen ist, der einen Aufhängepunkt (11) des beweglichen Bereichs bildet.

5. Führungsvorrichtung nach Anspruch 4, dadurch gekennzeichnet, daß die Kippwiege (12) ein zusammengesetztes Teil ist, das durch ein Endstück (11), das den Durchtrittsknick bildet, an Ort und Stelle gehalten wird.

6. Führungsvorrichtung nach einem der Ansprüche 1 bis 3, dadurch gekennzeichnet, daß zwischen dem gelenkigen Führungsorgan (13) und dem Aufhängepunkt (11) des beweglichen Bereichs das Kabelteil gegen ein Quetschen beim Schließen durch eine rohrförmige Manschette geschützt ist.

7. Führungsvorrichtung nach Anspruch 6, dadurch gekennzeichnet, daß die rohrförmige Manschette eine Feder (23) mit aneinanderliegenden Wicklungen.

8. Führungsvorrichtung nach Anspruch 7, dadurch gekennzeichnet, daß die Feder (23) einerseits auf dem beweglichen Bereich in der Nähe des zugehörigen Aufhängepunkts und andererseits am gelenkigen Führungsorgan befestigt ist.

9. Führungsvorrichtung nach einem der Ansprüche 1 bis 8, dadurch gekennzeichnet, daß das gelenkige Führungsorgan (13) eine gebogene Klappe ist.

10. Führungsvorrichtung nach Anspruch 9, dadurch gekennzeichnet, daß die gebogene Klappe (13) eine Ausnehmung für den Hindurchtritt des Kabelteils aufweist.

11. Führungsvorrichtung nach Anspruch 9 oder 10, dadurch gekennzeichnet, daß die Klappe auf die Innenseite des Gehäuses durch eine Torsionsfeder (15) zurückgedrängt wird.

12. Führungsvorrichtung nach einem der Ansprüche 9 bis 11, dadurch gekennzeichnet, daß die gebogene Klappe (13) auf einem Fadendurchgangsteil (6) angelenkt ist, das außen am Gehäuse befestigt ist, in der Nähe eines Fensters (9), das in dem Gehäuse gegenüber der gebogenen Klappe ausgebildet ist, wobei das Fadendurchführungsteil den seitlichen Aufhängepunkt bildet.

13. Führungsvorrichtung nach einem der Ansprüche 9 bis 12, dadurch gekennzeichnet, daß die nutzbare Führungslänge der gebogenen Klappe (13) in Abhängigkeit des Winkelbereiches gewählt wird, der für den bewegbaren Bereich (2) erforderlich ist, derart, daß das Kabelteil für jede Stellung des beweglichen Bereichs entsprechend dem Winkelbereich keiner gefährlichen Dehnung unterliegt.

14. Führungsbereich nach einem der Ansprüche 1 bis 13, dadurch gekennzeichnet, daß der bewegliche Bereich (2) eine die Einrichtung tragende Kappe ist, die für das Gehäuse (1) in Schließstellung die Vorderseite bildet.

## FIG_1

## FIG_2

# FIG. 3